Europäisches Patentamt

European Patent Office

Office européen des brevets

(19)

(11) Veröffentlichungsnummer: **0 154 267**
**B1**

(12) **EUROPÄISCHE PATENTSCHRIFT**

(45) Veröffentlichungstag der Patentschrift: **09.01.91**

(21) Anmeldenummer: **85101972.9**

(22) Anmeldetag: **22.02.85**

(51) Int. Cl.⁵: **G 21 C 21/10**

(54) **Verfahren zur Herstellung von plattenförmigen Brennelementen für Forschungsreaktoren.**

(30) Priorität: **07.03.84 DE 3408240**

(43) Veröffentlichungstag der Anmeldung:
**11.09.85 Patentblatt 85/37**

(45) Bekanntmachung des Hinweises auf die
Patenterteilung:
**09.01.91 Patentblatt 91/02**

(84) Benannte Vertragsstaaten:
**DE FR GB**

(56) Entgegenhaltungen:
**GB-A-1 001 874**
**GB-A-1 071 363**
**GB-A-2 089 101**
**US-A-2 820 751**
**US-A-3 211 628**

(73) Patentinhaber: **Nukem GmbH**
**Rodenbacher Chaussee 6 Postfach 11 00 80**
**D-6450 Hanau 11 (DE)**

(72) Erfinder: **Langhans, Horst, Dipl.-Ing.**
**Herrenweg 10**
**D-8763 Klingenberg (DE)**
Erfinder: **Wehner, Erwin, Dr. Dipl.-Chem.**
**Bansastrasse 5b**
**D-6078 Neu Isenburg (DE)**

Courier Press, Leamington Spa, England.

EP 0 154 267 B1

**Beschreibung**

Die Erfindung betrifft ein Verfahren zur Herstellung von plattenförmigen Brennelementen für Forschungs- und Materialtestreaktoren mit Beladungen von mehr als 26 Vol.% an Uranverbindungen, durch Mischen der pulverförmigen Uranverbindungen mit Aluminiumpulver, Pressen zu einem plättchenförmigen Formkörper, Einschließen des Formkörpers in eine Umhüllung aus Aluminium und Einlegen in eine Aluminiumplatte mit einer dem Formkörper entsprechenden Aussparung, beidseitiges Abdecken des Formkörpers und der Aluminiumplatte mit zwei Aluminiumblechen und Auswalzen dieses Paketes.

Es ist bekannt, plattenförmige Brennelemente für Forschungs- und Materialtestreaktoren nach der sogenannten Bildchen-Rahmen-Technik herzustellen. Dabei wird zunächst der eigentliche Brennstoffkern dieser Brennelemente aus einer Mischung von geeignetem Brennstoffpulver mit Aluminiumpulver in Form eines flachen Täfelchens hergestellt, welches üblicherweise Bildchen genannt wird. Dieses Bildchen wird in einen Rahmen vergleichbarer Dicke eingepaßt und mit zwei Blechen oben und unten abgedeckt. Rahmen und Deckelbleche sind aus Aluminium oder Aluminiumlegierungen gefertigt. Das entstandene sandwichartig aufgebaute "Paket" wird seitlich lokal verschweißt und dann in mehreren Walzstichen zu einer Platte ausgewalzt. Das fertige Brennelement besteht folglich aus einer Aluminium- bzw. Aluminiumlegierungsplatte, die im Inneren eine brennstoffhaltige Zone aus einer Uranverbindung in einer Aluminiummatrix einschließt. Entsprechend des Aufbaues dieser Brennstoffzone wird hierbei von Dispersionskernbrennstofen gesprochen. Als Brennstoffe werden dazu Uranverbindungen, wie Oxide, Silizide, Aluminide oder Ferride eingesetzt.

Die Auslegung solcher plattenförmiger Brennelemente erfolgt jeweils nach den Anforderungen des zu beladenden Forschungs- bzw. Materialtestreaktors. Je nach der Leistung des Reaktors muß der Urangehalt in der Brennstoffzone der Brennelemente höher oder niedriger liegen. Bei den üblichen Standardbrennelementen, die unter Einsatz von hochangereichertem Uran hergestellt werden, liegt der Uranverbindungsanteil in der Brennstoffzone bei Werten zwischen 7 und 26 Volumenprozent.

Die Reaktoren und die entsprechenden Brennelemente können aber auch auf den Einsatz von niedrigangereichertem Uran umgerüstet werden. Während hochangereichertes Uran 80 bis 93 Gew.% des spaltbaren Isotops U-235 enthält, ist der U-235 Anteil bei niedrigangereichertem Uran maximal 20 Gew.% beschränkt.

Zur Erhaltung der Reaktorleistung bei Umstellung von hochangereichertem Uran auf Brennelemente mit niedrigangereichertem Uran mußt die Urandichte im Brennstoff entsprechend angehoben werden. Dies führt bei einem Reaktor mit niedriger Leistung zu einer Anhebung der Urandichte in der Brennstoffzone z.B. von 0,5 auf 2,4 g U/cm$^3$, bei einem Reaktor hoher Leistung von z.B. 1,3 auf 7,0 g U/cm$^3$.

Ist der Uranverbindungsanteil eines Dispersionsbrennstoffes herstellungsbedingt auf 26 Vol.% begrenzt, kann selbst unter Einsatz von hochdichten Uranbrennstoffen, wie U$_3$Si (Dichte 15,6 g/cm$^3$) in der Brennstoffzone höchstens eine Urandichte von 3,9 g U/cm$^3$ erreicht werden. Üblicherweise als Brennstoff verwendetes U$_3$O$_8$ führt zu maximal 1,9 g U/cm$^3$. Eine Herstellung von Dispersionskernbrennstoffelementen mit niedrig angereichertem Uran für Forschungsreaktoren mittlerer und hoher Leistung ist daher mit der bekannten Fertigungstechnik nicht möglich, da höhere Volumenanteile an Uranverbindungen in der Aluminiummatrix erforderlich werden.

Eine weitere Anhebung der Urandichte in der Brennstoffzone kann nur über eine höhere Volumenbeladung mit der Uranverbindung erreicht werden. Bei entsprechenden Versuchen zeigte sich, daß vom Gesichtspunkt der Verformbarkeit des Bildchens beim Walzprozeß und der Erhaltung geeigneter Matrixeigenschaften in der fertigen Platte eine Anhebung auf etwa 45 Vol% an Uranverbindung in der Brennstoffzone möglich ist.

Aus solchen Bildchen nach der Standardtechnik, bestehend aus Einsetzen der gepressten Brennstoff-Aluminium-Formkörper in einen Aluminium-Rahmen, Abdecken mit Blechen, seitlichem Verschweißen zu einem Walzpaket und Auswalzen, hergestellte Brennelemente können jedoch den vom Reaktorbetreiber an sie gestellten strengen Qualitätsanforderungen in einem wichtigen Punkt nicht genügen.

In einem plattenförmigen Brennelement ist die Geometrie der uranhaltigen Zone genau vorgeschrieben. Brennstoffpartikel außerhalb dieser rechteckigen Zone, also in der sie umgebenden Aluminium- bzw. Aluminiumlegierungszone, werden in einer Röntgenstrahldurchleuchtung erkannt und führen zur Zurückweisung der betreffenden Platte.

Während die Einhaltung der Brennstoffzonengeometrie bei Brennelementen mit einer Volumenbeladung von maximal 26 Vol.% Uranverbindung keine probleme aufwirft, führen Bildchen mit höheren Volumenbeladungen zu Brennelementen, die außerhalb der spezifizierten Brennstoffzone Einlagerungen kleiner Brennstoffpartikel aufweisen. Ursache ist die vergleichsweise sprödere Materialeigenschaft der hochbeladenen Bildchen, was im Verarbeitungsprozeß zum Abreiben oder Abplatzen kleiner brennstoffhaltiger Partikel führt, die zwischen den das Bildchen umgebenden Rahmen und das Deckblech geraten und in der Folge dort eingewalzt werden. Diese Partikel werden üblicherweise als "weiße Punkte" bezeichnet, weil sie im Durchleuchtungsbild der Röntgenürfung als solche erscheinen.

In der GB-A-1 071 363 wird ein Verfahren zur positionierung des Bildchens im Walzpaket beschrieben, bei dem das Bildchen mit zusätzlichen Blecheinlagen im Rahmen montiert und vor dem Auswalzen durch Verschweißen dieser Bleche mit dem Rahmenausschnitt rundum eingeschlossen wird. Zur Herstellung von Brennelementen mit hoher Volumenbeladung an Kernbrennstoff ist diese Technik aber nicht geeignet, da sie sehr aufwendig und umständlich ist. Das beschriebene Einschweißen der Bildchen führt außerdem zu hohem Produktionsausschuß durch eingeschlossene Luft, die beim Walzen nicht entweichen kann und zu Bindungsfehlern, wie etwa Blasen, in dem fertigen Brennelement führt. Daneben kann auch das Auftreten "weißer Punkte" in der brennstoffreien Zone mit dieser Technik nicht zuverlässig verhindert werden, da diese bereits beim Assemblieren von Bildchen und Rahmen verursacht werden. Das Auftreten von Uran zumindest in der Schweißnaht der beschriebenen eingeschweißten Walzpakete ist ebenfalls nicht verhinderbar, da beim Walzen dieser Platten auch die Schweissnaht gestreckt wird und die "weißen Punkte" damit in die als uranfrei spezifizierte Zone geraten. Solche Platten sind aber für den Reaktoreinsatz ungeeignet.

Es war daher Aufgabe der vorliegenden Erfindung, ein Verfahren zur Herstellung von plattenförmigen Brennelementen für Forschungs- und Materialtestreaktoren mit Beladungen von mehr als 26 Vol.% Uranverbindungen gemäß dem Oberbegriff von Anspruch 1 zu entwickeln, mit dem eine exakt definierte Geometrie der Brennstoffzone eingehalten werden kann und vor allem keine "weißen Punkte" außerhalb dieser Zone auftreten.

Die Aufgabe wurde erfindungsgemäß dadurch gelöst, daß als Umhüllung eine 0,01 bis 0,3 mm starke Aluminiumschicht direkt auf den plättchenförmigen Formkörper aufgebracht wird.

Vorzugsweise wird die dünne Aluminiumschicht durch thermisches Aufspritzen oder durch Aufdampfen auf den plättchenförmigen Formkörper aufgebracht.

Zur Fabrikation der aluminiumumhüllten Brennstoffbildchen wird zunächst eine Mischung aus Aluminiumpulver und Brennstoffpulver in bekannter Weise zu tafelförmigen Bildchen verpreßt. Eventuelle Schmiermittelzusätze werden aus diesen Bildchen durch eine Temperaturbehandlung entfernt. Die so hergestellten Bildchen werden auf einer drehbaren Halterung so montiert, daß eine Beschichtung aller Seiten und Kanten möglich ist. Nun wird durch thermisches Aufspritzen oder durch Aufdampfen in einer evakuierten Anlage rundum eine dünne Aluminiumschicht aufgetragen. Dabei kann die Schichtdicke durch Dosierung der Spritz- oder Dampfquelle bzw. vor allem durch pro Fläche aufgewandte Beschichtungszeit in einfacher Weise eingestellt werden. Die Schicht soll 0,01 bis 0,3 mm dick sein, vorzugsweise wird eine Schicht von 0,05 bis 0,1 mm Dicke gewählt.

Überraschenderweise hat es sich gezeigt, daß bereits dünne Aluminiumschichten von 0,01 bis 0,3 mm dem Bildchen eine völlig andere Hantierungstauglichkeit geben. Während ein nicht aluminiumüberzogenes Bildchen mit hoher Uranbeladung, beispielsweise 45 Vol.% Uranverbindung dispergiert in Aluminiummatrix, so spröde ist, daß es wie eine Schreibkreide zum Zeichnen benutzt werden könnte, gelingt dies mit einem aluminiumüberzogenen Bildchen nicht. Die dünne Aluminiumschicht ist offenbar elastisch genug, um die Auswirkung des spröden Untergrundes zu überdecken, ohne das Entweichen von Luft beim Walzen zu behindern.

So hergestellte aluminiumüberzogene Dispersionsbrennstoffbildchen lassen sich mit dem bekannten Verfahren zur Herstellung von plattenförmigen Brennelementen für Forschungs- und Materialtestreaktoren ohne Probleme verarbeiten. Die Bildchen können ohne Gefahr des Abbröckelns feinster Brennstoffpartikeln in das Walzpaket, bestehend aus Aluminium- bzw. Aluminiumlegierungsrahmen und Deckblechen, eingelegt werden. Nach seitlichem Verschweißen wird dieses Walzpaket in mehreren Stichen auf etwa sechsfache Länge ausgewalzt. Bei keinem dieser oder der nachfolgenden Schritte ist eine negative Auswirkung der Aluminiumschutzschicht zu bemerken. Durch die Aluminiumzwischenschicht kann sogar die Verbindung zwischen Bildchen und Rahmen bei Verwendung von Strukturmaterial aus Aluminiumlegierungen deutlich verbessert werden. Das Auftreten von "weißen Punkten" außerhalb der Brennstoffzone wird zuverlässig verhindert. Außerhalb der brennstoffhaltigen Zone ist kein uranhaltiges Partikel mehr röntgenographisch feststellbar. Damit ist es problemlos möglich, in der Geometrie eng spezifizierte Brennstoffzonen einzuhalten. Versuche haben gezeigt, daß die günstige Wirkung der Aluminiumbeschichtung unabhängig von Art und Konzentration des eingesetzten Brennstoffs und von der Wahl des Strukturmaterials ist. Wenn auch Aluminium- bzw. Aluminiumlegierungen als besonders geeignet erscheinen, ist die Technik der Bildchenbeschichtung auch anwendbar auf andere Strukturmaterialien oder Bildchenmatrixes.

Folgende Beispiele sollen das erfindungsgemäße Verfahren näher erläutern:

1. Aus Aluminiumpulver und $U_3O_8$-Pulver, homogen vermischt im Gewichtsverhältnis 0,3, werden mit einem Preßdruck von rund 600 MPa tafelförmige Bildchen mit den Abmessungen 100 × 61 × 3 mm gepreßt. Die wie üblich geglühten Bildchen werden auf einer drehbaren Vorrichtung fixiert und unter Verwendung einer Flammspritzpistole mit Knallgasflamme und kontinuierlicher Al-Pulverdosierung allseitig mit einer 0,1 mm starken Schicht aus Aluminium überzogen. Die so hergestellten Al-beschichteten Dispersionsbrennstoffbildchen werden in einen Rahmen aus einer Aluminiumlegierung mit angepaßtem Ausschnitt (100 mm × 61 mm) eingelegt und mit Deckblechen aus derselben Legierung versehen. Das so entstandene Walzpaket wird seitlich partiell verschweißt und in mehreren Walzstichen heiß bzw. kalt zu Platten mit der sechsfachen Länge des ursprünglichen Walzpakets ausgewalzt. Die fertigen Brennstoffplatten entsprechen in allen Punkten den an sie gestellten Spezifikationsanforderungen.

2. Aluminiumpulver und $U_3Si_2$-Pulver, homogen

im Gewichtsverhältnis 0,27 gemischt, wird gemäß Beispiel 1 zu Bildchen mit den Abmessungen 18 × 44 × 3 mm verarbeitet. Die so hergestellten Bildchen werden auf eine drehbare Vorrichtung montiert und in den Bedampfungsraum einer Aufdampfanlage eingesetzt. Dort werden sie unter Vakuum mit dem Dampf einer Aluminiumquelle allseitig mit einer Aluminiumschicht von 0,04 mm Dicke beschichtet. Die weitere Verarbeitung der Al-überzogenen Bildchen geschieht analog zu Beispiel 1.

## Patentansprüche

1. Verfahren zur Herstellung von plattenförmigen Brennelementen für Forschungs- und Materialtestreaktoren mit Beladungen von mehr als 26 Vol.% an Uranverbindungen, durch Mischen der pulverförmigen Uranverbindungen mit Aluminiumpulver, Pressen zu einem plättchenförmigen Formkörper, Einschließen des Formkörpers in eine Umhüllung aus Aluminium und Einlegen in eine Aluminiumplatte mit einer dem Formkörper entsprechenden Aussparung, beidseitiges Abdecken des Formkörpers und der Aluminiumplatte mit zwei Aluminiumblechen und Auswalzen dieses Pakets, dadurch gekennzeichnet, daß als Umhüllung eine 0,01 bis 0,3 mm starke Aluminiumschicht direkt auf den plättchenförmigen Formkörper aufgebracht wird.

2. Verfahren nach Anspruch 1, dadurch gekennzeichnet, daß die Aluminiumschicht durch thermisches Aufspritzen oder durch Aufdampfen aufgebracht wird.

3. Verfahren nach Anspruch 1 und 2, dadurch gekennzeichnet, daß die Aluminiumschicht in einer Dicke von 0,05 bis 0,1 mm aufgebracht wird.

## Revendications

1. Procédé de fabrication combustibles en plaques pour les réacteurs de recherche et de test des matériaux avec des charges de plus de 26% en volume en composés d'uranium, par mélange de composés d'uranium en poudre avec de la poudre·d'aluminium, pressage en corps moulé en forme de plaque, incorporation du corps moulé dans une enveloppe en aluminium et dépôt sur une plaque d'aluminium avec un évidement correspondant au corps moulé, recouvrement de chaque côté du corps moulé et de la plaque d'aluminium avec deux tôles en aluminium et laminage de cet ensemble, caractérisé en ce qu'on dépose comme enrobage, une couche d'aluminium épaisse de 0,01 à 0,3 mm directement sur les corps moulés en forme de plaques.

2. Procédé selon la revendication 1, caractérisé en ce qu'on dépose la couche d'aluminium par pulvérisation thermique ou par vaporisation.

3. Procédé selon les revendications 1 et 2, caractérisé en ce qu'on dépose la couche d'aluminium avec une épaisseur de 0,05 à 0,1 mm.

## Claims

1. A process for the production of plate-shaped fuel elements for research and materials testing reactors with charges of more than 26% by volume uranium compounds by mixing the powder-form uranium compounds with aluminium powder, compression molding to a plate-shaped moulding, covering the moulding with a layer of aluminium and introducing it into an aluminium plate with a recess corresponding to the moulding, covering the molding and the aluminium plate on both sides with two aluminium sheets and flatrolling the whole, characterized in that a 0.01 to 0.3 mm thick layer of aluminium is directly applied to the plate-shaped moulding as the covering.

2. A process as claimed in claim 1, characterized in that the layer of aluminium is applied by thermal sputtering or by evaporation coating.

3. A process as claimed in claims 1 and 2, characterized in that the layer of aluminium is applied in a thickness of 0.05 to 0.1 mm.